(19) Europäisches Patentamt
European Patent Office
Office européen des brevets

(11) **EP 3 911 046 A1**

(12) **EUROPEAN PATENT APPLICATION**
published in accordance with Art. 153(4) EPC

(43) Date of publication:
**17.11.2021 Bulletin 2021/46**

(51) Int Cl.:
***H04W 56/00*** (2009.01)

(21) Application number: **19915304.0**

(86) International application number:
**PCT/CN2019/075249**

(22) Date of filing: **15.02.2019**

(87) International publication number:
**WO 2020/164123 (20.08.2020 Gazette 2020/34)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Technologies Co., Ltd.**
**Shenzhen, Guangdong 518129 (CN)**

(72) Inventors:
 • **BI, Wenping**
   **Shenzhen, Guangdong 518129 (CN)**
 • **YU, Zheng**
   **Shenzhen, Guangdong 518129 (CN)**
 • **CHENG, Xingqing**
   **Shenzhen, Guangdong 518129 (CN)**
 • **XIE, Xinqian**
   **Shenzhen, Guangdong 518129 (CN)**
 • **FEI, Yongqiang**
   **Shenzhen, Guangdong 518129 (CN)**

(74) Representative: **Maiwald Patent- und Rechtsanwaltsgesellschaft mbH**
**Elisenhof**
**Elisenstraße 3**
**80335 München (DE)**

(54) **COMMUNICATION METHOD AND DEVICE**

(57)     A communication method and device are provided, to resolve a problem in the current technology that accuracy of a method for verifying validity of a TA by UE is relatively low. The method includes: A terminal device determines first information and second information, where the first information is used by the terminal device to determine validity of a TA. The terminal device determines N TA verification criteria based on the second information, and determines the validity of the TA based on the first information and the N TA verification criteria. Herein, N is an integer greater than or equal to 1, and the TA verification criteria include that the TA verification criteria hold true when a specified condition is met.

S301

A terminal device determines first information and second information

S302

The terminal device determines N TA verification criteria based on the second information

S303

The terminal device determines validity of a TA based on the first information and the N TA verification criteria

FIG. 3

## Description

## TECHNICAL FIELD

This application relates to the field of communication technologies, and in particular, to a communication method and a device.

## BACKGROUND

In the same cell, different user equipments (user equipment, UE) have different locations, and uplink data sent by the UEs may reach an evolved Node B (evolved Node-B, eNB) at different times, which causes interference between the users. Therefore, the eNB estimates uplink timing of UE, and sends a timing advance (Timing Advance, TA) to the UE based on the estimated uplink timing, and the UE adjusts an uplink transmission time based on the TA, so that uplink data sent by all UEs in the cell reaches the eNB at the same time.

A procedure of scheduling-free uplink transmission is as follows: When UE needs to send uplink data, a base station does not need to perform dynamic uplink scheduling on the UE, and the UE performs uplink transmission on a preconfigured transmission resource in a predetermined sending manner. During the scheduling-free uplink transmission, the UEs need to have a valid TA before performing scheduling-free uplink transmission.

Although several attributes (namely, a TA verification criterion) related to validity of a TA are provided in the prior art, currently, there is no specific solution to resolve how to use these attributes to determine the validity of the TA.

## SUMMARY

Embodiments of this application provide a communication method and a device, to resolve a prior-art problem of how to determine validity of a TA with reference to a plurality of TA verification criteria.

According to a first aspect, an embodiment of this application provides a communication method. The method includes: The terminal device determines first information and second information, where the first information is used by the terminal device to determine validity of a TA. The terminal device determines N TA verification criteria based on the second information, and determines the validity of the TA based on the first information and the N TA verification criteria. Herein, N is an integer greater than or equal to 1, and the TA verification criteria include that the TA verification criteria hold true when a specified condition is met. In this embodiment of this application, the terminal device determines the validity of the TA with reference to the first information and the N TA verification criteria, so that different verification criteria can be effectively and properly combined to verify the validity of the TA, thereby improving accuracy of TA validity verification, and avoiding an unnecessary step of updating the TA. Therefore, it can be ensured that no power consumption is wasted in a system and no interference is caused to the system.

In a possible design, the first information may be predefined, or the first information may be configured by a network device.

In a possible design, the first information may be configured by the network device by using higher layer signaling, or may be configured by using physical layer signaling such as downlink control information (downlink control information, DCI), where the higher layer signaling may be radio resource control (radio resource control, RRC) signaling or a media access control control element (media access control control element, MAC CE).

In a possible design, the second information may be predefined, or the second information may be configured by the network device.

In a possible design, the N TA verification criteria include X TA verification criteria and Y TA verification criteria, where X is greater than or equal to 1, Y is greater than or equal to 0, and X + Y = N. When the terminal device determines the validity of the TA based on the first information and the N TA verification criteria, if the terminal device determines that none of the X TA verification criteria holds true, the terminal device may determine the validity of the TA based on the first information and the Y TA verification criteria. If the terminal device determines that at least one TA verification criterion in the X TA verification criteria holds true, the terminal device may determine that the TA is invalid. In the foregoing design, when any TA verification criterion in the X verification criteria holds true, it may be determined that the terminal device moves relatively greatly, for example, a serving cell changes. In this case, it may be determined that the TA is invalid, so that the terminal device can quickly determine that the validity of the TA. When none of the X verification criteria holds true, it may indicate that the terminal device does not move relatively greatly. Therefore, the terminal device may further determine the validity of the TA with reference to the Y TA verification criteria. In this manner, different verification solutions may be set based on different scenarios. Therefore, a speed and accuracy of TA verification can be improved. In addition, the N TA verification criteria are classified into two types based on priorities or degrees of correlations with the validity of the TA. One type of verification criteria (namely, the X TA verification criteria) is strongly correlated with the validity of the TA, and the other type of verification criteria (namely, the Y TA verification criteria) is relatively weakly correlated with the validity of the TA. The validity of the TA can be more accurately evaluated by classifying the N verification criteria. For example, it indicates that the TA is invalid provided that one of the strongly correlated X TA verification criteria holds true, and the TA is invalid if only one or more of the weakly correlated Y TA verification criteria hold true only when none of the verification criteria of the strongly correlated type holds true.

In a possible design, when the terminal device determines the validity of the TA based on the first information and the Y TA verification criteria, if the terminal device determines that at least M TA verification criteria in the Y TA verification criteria hold true, the terminal device may determine that the TA is invalid, where M is an integer greater than 0 and less than or equal to Y, and M is determined by the terminal device based on the first information. In the foregoing design, the threshold M is determined based on the first information, so that verification of the validity of the TA can be designed by combining different verification criteria effectively and properly, thereby improving accuracy of TA validity verification.

In a possible design, when the terminal device determines the validity of the TA based on the first information and the Y TA verification criteria, if the terminal device determines that less than M TA verification criteria in the Y TA verification criteria hold true, the terminal device may determine that the TA is valid, where M is an integer greater than 0 and less than or equal to Y, and M is determined by the terminal device based on the first information. In the foregoing design, the threshold M is determined based on the first information, so that verification of the validity of the TA can be designed by combining different verification criteria effectively and properly, thereby improving accuracy of TA validity verification.

In a possible design, the N TA verification criteria may include a set of first TA verification criteria and a set of second TA verification criteria, the set of first TA verification criteria includes one or more TA verification criteria, and the set of second TA verification criteria includes one or more TA verification criteria. The TA verification criteria included in the set of first TA verification criteria are all different from the TA verification criteria included in the set of second TA verification criteria, in other words, no verification criterion belongs to both the first TA verification criteria and the second verification criteria. When the terminal device determines the validity of the TA based on the first information and the N TA verification criteria, if the terminal device determines that at least one TA verification criterion in the set of first TA verification criteria holds true, the terminal device may determine that the TA is invalid. In the foregoing design, the N TA verification criteria are classified into two types based on priorities or degrees of correlations with the validity of the TA. One type of verification criteria is strongly correlated with the validity of the TA (namely, the set of first TA verification criteria), and the other type of verification criteria (namely, the set of second TA verification criteria) is relatively weakly correlated with the validity of the TA. The validity of the TA can be more accurately evaluated by classifying the N verification criteria. For example, it indicates that the TA is invalid provided that one verification criterion in the strongly correlated set of first TA verification criteria holds true, and the TA is invalid if only one or more verification criteria in the weakly correlated set of second TA verification criteria hold true only when no verification criterion in the strongly correlated set of first TA verification criteria holds true.

In a possible design, when the terminal device determines the validity of the TA based on the first information and the set of second TA verification criteria, if the terminal device determines that at least M TA verification criteria in the set of second TA verification criteria hold true, the terminal device may determine that the TA is invalid, where m is an integer greater than 0, and m is determined by the terminal device based on the first information. In the foregoing design, the threshold m is determined based on the first information, so that verification of the validity of the TA can be designed by combining different verification criteria effectively and properly, thereby improving accuracy of TA validity verification.

In a possible design, when the terminal device determines the validity of the TA based on the first information and the set of second TA verification criteria, if the terminal device determines that less than m TA verification criteria in the set of second TA verification criteria hold true, the terminal device may determine that the TA is valid, where m is an integer greater than 0, and m is determined by the terminal device based on the first information. In the foregoing design, the threshold m is determined based on the first information, so that verification of the validity of the TA can be designed by combining different verification criteria effectively and properly, thereby improving accuracy of TA validity verification.

In a possible design, when the terminal device determines the validity of the TA based on the first information and the N TA verification criteria, if the terminal device can determine that at least S TA verification criteria in the N TA verification criteria hold true, the terminal device determines that the TA is invalid, where $0 < S \leq N$, and S is an integer determined by the terminal device based on the first information. In the foregoing design, the threshold S is determined based on the first information, so that verification of the validity of the TA can be designed by combining different verification criteria effectively and properly, thereby improving accuracy of TA validity verification.

In a possible design, when the terminal device determines the validity of the TA based on the first information and the N TA verification criteria, if the terminal device can determine that less than S TA verification criteria in the N TA verification criteria hold true, the terminal device determines that the TA is valid. In the foregoing design, the threshold S is determined based on the first information, so that verification of the validity of the TA can be designed by combining different verification criteria effectively and properly, thereby improving accuracy of TA validity verification.

In a possible design, when the terminal device determines the validity of the TA based on the first information and the N TA verification criteria, if the terminal device determines that at least one TA verification criterion in R TA verification criteria holds true, the terminal device determines that the TA is invalid. The R TA verification criteria are determined by the terminal device based on the N TA verification criteria and a first rule, $0 < R \leq N$, R is an integer determined by the terminal device based on the first information, and the first rule is predefined, or configured by the network device. In the foregoing design, the R TA verification criteria are determined by using the N TA verification criteria and the first rule, and then the validity of the TA is verified by combining the R TA verification criteria, so that efficiency and accuracy of TA validity verification can be improved.

In a possible design, when the terminal device determines the validity of the TA based on the first information and the N TA verification criteria, if the terminal device determines that none of R TA verification criteria holds true, the terminal device determines that the TA is valid. The R TA verification criteria are determined by the terminal device based on the N TA verification criteria and a first rule, $0 < R \leq N$, R is an integer determined by the terminal device based on the first information, and the first rule is predefined, or configured by the network device. In the foregoing design, the R TA verification criteria are determined by using the N TA verification criteria and the first rule, and then the validity of the TA is verified by combining the R TA verification criteria, so that efficiency and accuracy of TA validity verification can be improved.

In a possible design, the first rule may be determining the R TA verification criteria based on priorities of the N TA verification criteria. For example, the first rule may be determining the R TA verification criteria in descending order of priorities of the N TA verification criteria, or the first rule may be determining the R TA verification criteria in ascending order of priorities of the N TA verification criteria. In the foregoing design, because a parameter used for a TA verification criterion with a higher priority changes more greatly when the TA of the terminal device changes, the R TA verification criteria are determined with reference to the priorities of the N TA verification criteria, and efficiency and accuracy of TA validity verification can be improved when the validity of the TA is verified based on the R TA verification criteria. In a possible design, the first rule may be determining the R TA verification criteria based on correlations of the N TA verification criteria, where the correlation may be a correlation between a TA verification criterion and the TA, or the like. For example, the first rule may be determining the R TA verification criteria in descending order of correlations of the N TA verification criteria, or the first rule may be determining the R TA verification criteria in ascending order of correlations of the N TA verification criteria.

In a possible design, the N TA verification criteria may include a first TA verification criterion, and the first TA verification criterion includes: if a first timer does not expire, the first TA verification criterion does not hold; if the first timer expires and a first reference signal received power (Reference Signal Receiving Power, RSRP) value is less than a specified threshold, the first TA verification criterion does not hold; or if the first timer expires and the first RSRP value is greater than or equal to a specified threshold, the first TA verification criterion holds true. In the foregoing design, many factors (such as shadow and multipath) affect the RSRP. Therefore, in some scenarios, the RSRP changes greatly but actually the TA changes slightly, and the TA is still valid. In addition, an initial phase of RSRP measurement has poor stability and is unreliable. Therefore, before the first timer expires, because a time period for the RSRP measurement is inaccurate and changes greatly, the RSRP change may not be considered, and then, impact of the RSRP on the validity of the TA is considered when the first timer expires. According to the foregoing design, the impact of the RSRP on the validity of the TA and a misjudgment of the validity of the TA in an inaccurate initial measurement phase can be effectively eliminated, stability and accuracy of TA verification can be improved, system performance can be improved, unnecessary TA update operations can be reduced, and user power consumption can be reduced.

In a possible design, the first RSRP value may be a difference between two measured RSRP values. For example, the first RSRP value may be a difference between an RSRP value of a serving cell when a TA is obtained last time and a current RSRP value of the serving cell. Alternatively, the first RSRP value may be a difference between an average value of RSRP values of the serving cell measured in a period of time and the current RSRP value of the serving cell, or the like. The RSRP value may be a linear value (linear value) or may be a decibel (dB) value.

In a possible design, the N TA verification criteria may include a second TA verification criterion, and the second TA verification criterion includes: if a second RSRP value is less than a first threshold, the second TA verification criterion does not hold; if a second RSRP value is greater than or equal to the first threshold, and a second timer does not expire, the second TA verification criterion does not hold; or if the second RSRP value is greater than or equal to the first threshold, and the second timer expires, the second TA verification criterion holds true. In the foregoing design, because the second timer, namely, a TA timer (also referred to as a time alignment timer for idle mode, Time Alignment Timer for idle mode) may be inaccurate to some extent, for example, for a user with a small location change, although the TA timer expires, a location change of the user is very small and has little impact on the TA, the TA is still available. Therefore, impact of the second timer on the validity of the TA may not be considered when the RSRP value is relatively small, and then, the impact of the second timer on the validity of the TA is considered when the RSRP value is relatively large. By using the foregoing design, validity misjudgment caused by the TA timer can be effectively eliminated, and stability and accuracy of TA validity verification are improved. In this way, system performance can be improved, unnecessary TA update operations can be reduced, and user power consumption can be reduced.

In a possible design, the second RSRP value may be a difference between an RSRP value of a serving cell when a TA is obtained last time and a current RSRP value of the serving cell.

In a possible design, the second RSRP value may be a difference between two measured RSRP values. For example, the second RSRP value may be a difference between an RSRP value of a serving cell when a TA is obtained last time and a current RSRP value of the serving cell. Alternatively, the second RSRP value may be a difference between an average value of RSRP values of the serving cell measured in a period of time and the current RSRP value of the serving cell, or the like. The RSRP value may be a linear value (linear value) or may be a decibel (dB) value. In a possible design, the N TA verification criteria may include a third TA verification criterion, and the third TA verification criterion includes: if a third timer does not expire, the third TA verification criterion does not hold; or if the third timer expires and a third RSRP value is greater than a specified threshold, the third TA verification criterion does not hold; or if the third timer expires and the third RSRP value is less than or equal to the specified threshold, the third TA verification criterion holds true.

In a possible design, the third RSRP value may be a measured RSRP value. For example, the third RSRP value may be the current RSRP value of the serving cell, or the third RSRP value may be an average value of RSRP values of the serving cell measured in a period of time, or the like. The RSRP value may be a linear value (linear value) or may be a decibel (dB) value.

In a possible design, the N TA verification criteria may include a fourth TA verification criterion, and the fourth TA verification criterion includes: if a fourth RSRP value is greater than a second threshold, the fourth TA verification criterion does not hold; if the fourth RSRP value is less than or equal to the second threshold, and the second timer does not expire, the fourth TA verification criterion does not hold; or if the fourth RSRP value is less than or equal to the second threshold, and the second timer expires, the fourth TA verification criterion holds true.

In a possible design, the fourth RSRP value may be a measured RSRP value. For example, the fourth RSRP value may be a current RSRP value of a serving cell, or the fourth RSRP value may be an average value of RSRP values of the serving cell measured in a period of time, or the like. The RSRP value may be a linear value (linear value) or may be a decibel (dB) value.

According to a second aspect, an embodiment of this application provides a communication method. The method includes: A network device determines first information and second information, where the first information is used by a terminal device to determine validity of a TA, the second information is used by the terminal device to determine N TA verification criteria, and N is an integer greater than or equal to 1. The network device sends the first information and the second information to the terminal device. In this embodiment of this application, the network device sends the first information and the second information to the terminal device, so that the terminal device can determine the validity of the TA with reference to the first information and the N TA verification criteria, and the terminal device can effectively and properly combine different verification criteria to design verification of the validity of the TA, thereby improving accuracy of TA validity verification, and ensuring that no power consumption is wasted in a system and no interference is caused to the system.

In a possible design, the network device may alternatively send only the first information, where the first information is used to enable the UE to determine the validity of the TA based on the first information and a plurality of verification criteria. In the foregoing design, the second information may be preconfigured by the terminal device.

In a possible design, the network device may alternatively send only the second information. In the foregoing design, the first information may be preconfigured by the terminal device.

In a possible design, the network device may further send a first rule to the terminal device, where the first rule is determining the R TA verification criteria in descending order of priorities of the N TA verification criteria. In the foregoing design, because a parameter used for a TA verification criterion with a higher priority changes more greatly when the TA of the terminal device changes, the R TA verification criteria are determined with reference to priorities of the N TA verification criteria, and efficiency and accuracy of TA validity verification can be improved when the validity of the TA is verified based on the R TA verification criteria.

In a possible design, the first rule may be determining the R TA verification criteria based on the priorities of the N TA verification criteria. For example, the first rule may be determining the R TA verification criteria in descending order of priorities of the N TA verification criteria, or the first rule may be determining the R TA verification criteria in ascending order of priorities of the N TA verification criteria. In the foregoing design, because a parameter used for a TA verification criterion with a higher priority changes more greatly when the TA of the terminal device changes, the R TA verification criteria are determined with reference to the priorities of the N TA verification criteria, and efficiency and accuracy of TA validity verification can be improved when the validity of the TA is verified based on the R TA verification criteria.

In a possible design, the first rule may be determining the R TA verification criteria based on correlations of the N TA verification criteria, where the correlation may be a correlation between a TA verification criterion and the TA, or the like. For example, the first rule may be determining the R TA verification criteria in descending order of correlations of the N TA verification criteria, or the first rule may be determining the R TA verification criteria in ascending order of correlations of the N TA verification criteria. According to a third aspect, this application provides an apparatus. The apparatus may be a terminal device, a network device, or a chip. The apparatus has a function of implementing any embodiment in the first aspect or the second aspect. The function may be implemented by hardware, or may be implemented by hardware by executing corresponding software. The hardware or the software includes one or more modules corresponding to the function.

According to a fourth aspect, an apparatus is provided. The apparatus includes a processor, a communication interface, and a memory. The communication interface is configured to perform transmission of information, and/or a message, and/or data between the apparatus and another apparatus. The memory is configured to store computer-executable instructions. When the apparatus runs, the processor executes the computer-executable instructions stored in the memory, to enable the apparatus to perform the communication method according to any one of the first aspect or the designs of the first aspect, or any one of the second aspect or the designs of the second aspect.

According to a fifth aspect, this application further provides a system. The system includes the terminal device in any embodiment of the first aspect and the network device in any embodiment of the second aspect.

According to a sixth aspect, this application further provides a computer-readable storage medium. The computer-readable storage medium stores instructions. When the instructions are run on a computer, the computer is enabled to perform the method in the foregoing aspects.

According to a seventh aspect, this application further provides a computer program product including instructions. When the computer program product runs on a computer, the computer is enabled to perform the method according to the foregoing aspects.

**BRIEF DESCRIPTION OF DRAWINGS**

FIG. 1 is a schematic architectural diagram of a communication system according to an embodiment of this application;
FIG. 2 is a schematic diagram of a CP according to an embodiment of this application;
FIG. 3 is a schematic flowchart of a communication method according to an embodiment of this application;
FIG. 4 is a schematic diagram of a first TA verification criterion according to an embodiment of this application;

FIG. 5 is a schematic flowchart of a communication method according to an embodiment of this application;
FIG. 6 is a schematic structural diagram of a communication apparatus according to an embodiment of this application;
FIG. 7 is a schematic structural diagram of a communication apparatus according to an embodiment of this application;
FIG. 8 is a schematic structural diagram of a communication apparatus according to an embodiment of this application; and
FIG. 9 is a schematic structural diagram of a communication apparatus according to an embodiment of this application.

**DESCRIPTION OF EMBODIMENTS**

The following further describes in detail embodiments of this application with reference to accompanying drawings.

Communication methods provided in this application may be applied to various communication systems, for example, may be internet of things (internet of things, IoT), narrowband internet of things (narrow band internet of things, NB-IoT), or long term evolution (long term evolution, LTE), may be a fifth generation (5G) communication system, may be a hybrid architecture of LTE and 5G, or may be a 5G new radio (new radio, NR) system, a global system for mobile communications (global system for mobile communication, GSM), a mobile communication system (universal mobile telecommunication system, UMTS), a code division multiple access (code division multiple access, CDMA) system, or a new communication system that will emerge in the future communication development. The communication methods provided in the embodiments of this application may be used provided that one entity in a communication system needs to send transmission direction indication information, and the other entity needs to receive the indication information and determine a transmission direction within a specific time period based on the indication information.

The terminal device in the embodiments of this application is a device that provides voice and/or data connectivity for a user, for example, a handheld device or a vehicle-mounted device with a wireless connection function. The terminal device may alternatively be another processing device connected to a wireless modem. The terminal device may communicate with one or more core networks (core network) over a radio access network (radio access network, RAN). The terminal device may also be referred to as a wireless terminal, a subscriber unit (subscriber unit), a subscriber station (subscriber station), a mobile station (mobile station), a mobile station (mobile), a remote station (remote station), an access point (access point), a remote terminal (remote terminal), an access terminal (access terminal), a user terminal (user terminal), a user agent (user agent), a user device (user device), user equipment (user equipment), or the like. For example, the terminal device may be a mobile terminal, for example, a mobile phone (or also referred to as a cellular phone), and a computer that has a mobile terminal. For example, the terminal device may be a portable, pocket-size, handheld, computer in-built, or vehicle-mounted mobile apparatus, which exchanges voice and/or data with the radio access network. For example, the terminal device may alternatively be a device such as a personal communications service (personal communication service, PCS) phone, a cordless phone, a session initiation protocol (session initiation protocol, SIP) phone, a wireless local loop (wireless local loop, WLL) station, or a personal digital assistant (personal digital assistant, PDA). Common terminal devices include, for example, a mobile phone, a tablet computer, a notebook computer, a palmtop computer, a mobile internet device (mobile internet device, MID), and a wearable device such as a smartwatch, a smart band, and a pedometer. However, this is not limited in the embodiments of this application.

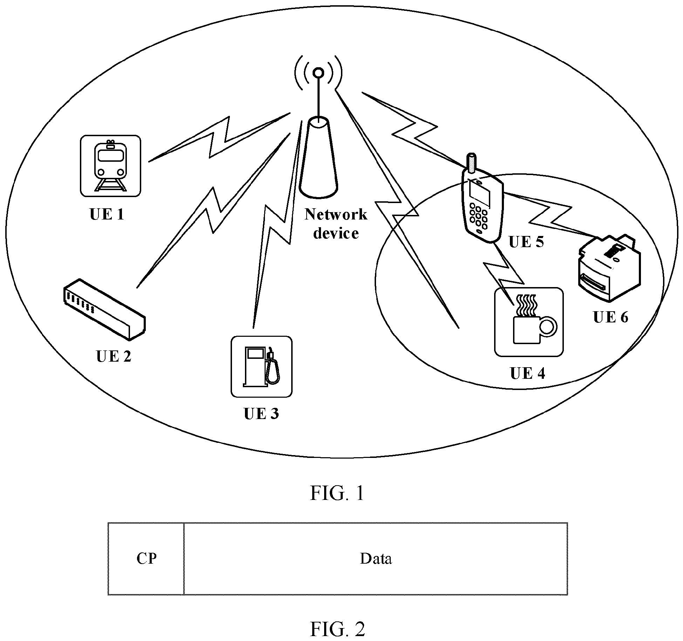

The network device in the embodiments of this application may be configured to perform mutual conversion between a received over-the-air frame and an internet protocol (internet protocol, IP) packet, and serve as a router between the terminal device and a remaining part of an access network. The remaining part of the access network may include an IP network, or the like. The network device may further coordinate attribute management of an air interface. For example, the network device may be a base transceiver station (base transceiver station, BTS) in a global system for mobile communications (global system for mobile communication, GSM) or code division multiple access (code division multiple access, CDMA), may be a NodeB (NodeB) in wideband code division multiple access (wideband code division multiple access, WCDMA), may be an evolved NodeB (evolutional NodeB, eNB or e-NodeB) in LTE, may be a new radio controller (new radio controller, NR controller), may be a gNodeB (gNB) in a 5G system, may be a centralized network element (centralized unit), may be a new radio base station, may be a radio remote module, may be a micro base station, may be a relay (relay), may be a distributed unit (distributed unit), or may be a reception point (transmission reception point, TRP), a transmission point (transmission point, TP), or any other radio access device. However, this is not limited in the embodiments of this application. The network device may cover one or more cells. FIG. 1 shows a communication system according to an embodiment of this application. The communication system includes a network device and six terminal devices, namely, UE 1 to UE 6. In the communication system, the UE 1 to the UE 6 may send uplink data to the network device, and the network device may receive the uplink data sent by the UE 1 to the UE 6. In addition, the UE 4 to the UE 6 may also form a communication subsystem. The network device may send downlink information to the UE 1, the UE 2, the UE 3, and the UE 5, and the UE 5 may send downlink information to the UE 4 and the UE 6 based on a device-to-device (device-to-device, D2D) technology. FIG. 1 is merely a schematic diagram, and does not specifically limit a type of the communication system, a quantity, a type, and the like of devices included in the communication system.

The network architecture and the service scenario described in the embodiments of this application are intended to describe the technical solutions in the embodiments of this application more clearly, and do not constitute a limitation on the technical solutions provided in the embodiments of this application. A person of ordinary skill in the art may know that, with the evolution of the network architecture and the emergence of new service scenarios, the technical solutions provided in the embodiments of this application are also applicable to similar technical problems.

In the communication system, UE may be in three modes: an idle (idle) mode, an inactive (inactive) mode, and a connected (connected) mode. UE in the connected mode may communicate with a base station through dynamic scheduling of the base station to transmit data. However, UE in the idle mode cannot transmit data through dynamic scheduling of the base station, and can transmit data only after random access is first performed and an RRC connection is established, or adds a small amount of uplink data to a message 3 in a random access procedure. The inactive mode may be considered as an intermediate mode of the two modes. UE and a core network reserve a context of a radio resource control (radio resource control, RRC) message in the connected mode. Therefore, compared with the idle mode, UE in the inactive mode can enter the connected mode at a faster speed. According to a current LTE protocol, when UE changes from the RRC connected mode to the idle mode, an RRC configuration message is not reserved, but when the UE changes from the connected mode to the inactive mode, the context of the RRC message is reserved.

An important feature of uplink transmission is that different terminal devices perform orthogonal multiple access (orthogonal multiple access) on a time frequency when performing uplink transmission, to be specific, different terminal devices from the same cell perform uplink transmission without interfering with each other. An orthogonal frequency division multiplexing (orthogonal frequency division multiplexing, OFDM) manner is used in an LTE system, and a composition structure of the orthogonal frequency division multiplexing manner is shown in FIG. 2. One advantage of such access is that no interference occurs between different terminal devices as long as a difference between times at which different terminal devices reach the network device does not exceed a length of a cyclic prefix (cyclic prefix, CP).

In the same cell, different terminal devices are located at different locations, and uplink data sent by the terminal device may reach the network device at different times. This causes interference between users. Therefore, when performing scheduling-free uplink transmission, the terminal devices need to use a valid timing advance (Timing Advance, TA), so that data sent by each terminal device when performing scheduling-free uplink transmission can reach the network device at the same time, thereby avoiding interference between the terminal devices. For example, if there is no TA, times for data of a user 1 at a cell center and data of a user 2 at a cell edge to reach a base station are very different. This may cause severe interference between the user 1 and the user 2. In other words, when a difference between a time at which data transmitted by the user 1 reaches the base station and a time at which data transmitted by the user 2 reaches the base station exceeds the CP, severe inter-symbol interference occurs.

To ensure uplink transmission orthogonality and avoid intra-cell (intra-cell) interference, the base station requires that times at which signals of different UEs from the same subframe but different frequency domain resources reach the base station are basically aligned. The base station can correctly decode uplink data sent by the UEs, provided that the base station receives the uplink data within a CP range. Therefore, uplink synchronization requires that times at which signals of different UEs from the same subframe reach the base station falls within the CP.

To ensure time synchronization on a receive side (a base station side), an uplink timing advance (uplink timing advance) mechanism is proposed in LTE. The TA is usually used for UE uplink transmission. To enable an uplink packet of the UEs to reach the base station at desired times, a radio frequency transmission delay caused by a distance is pre-estimated, and the data packet is sent in advance of a corresponding time TA.

From the perspective of the UE side, the TA is essentially a negative offset (negative offset) between a start time of receiving a downlink subframe and a time of transmitting an uplink subframe. The base station may control, by properly controlling an offset of each UE, times at which uplink signals from different UEs reach the base station. For UE that is relatively far away from the base station, due to a relatively large transmission delay, the UE needs to send uplink data earlier than UE that is relatively close to the base station.

The network device may estimate uplink timing of the terminal device, and send a TA to the terminal device based on the estimated uplink timing. The terminal device adjusts an uplink transmission time based on the TA, so that uplink data sent by all terminal devices in a cell reaches the network device at the same time.

Communication sometimes occurs only once in a long period of time in a service of machine-type communication, and a communication data packet of the communication is relatively small. To save energy and reduce signaling overheads, in LTE release-16, a mechanism for performing transmission on a predefined resource is determined and standardized, that is, communication that does not require dynamic downlink control information (downlink control information, DCI) scheduling, and therefore is also referred to as scheduling-free transmission. A procedure of scheduling-free uplink transmission is as follows: When UE needs to send uplink data, a base station does not need to perform dynamic uplink scheduling on the UE, and the UE performs uplink transmission on a preconfigured transmission resource in a predetermined sending manner.

During scheduling-free transmission, because uplink transmission of a user in the idle mode is discontinuous, and a time between adjacent transmissions is relatively long, a TA value may be outdated or inapplicable. In this case, a problem to be resolved is how to ensure validity of an uplink TA.

For UE in the connected mode, the UE maintains a TA timer (TA timer). When the TA timer expires (no uplink signal is transmitted during this time), the UE updates a TA by sending a preamble (preamble). When the TA timer does not expire, the base station measures, by transmitting an uplink signal, whether the TA is valid, and then uses a TA command (command) to trigger the user to update the TA.

For UE in the idle mode, as agreed in a Rel-16 standardization discussion procedure, when validity of a TA in the idle mode is verified, a serving cell change, a time alignment timer in the idle mode (also referred to as a time alignment timer for idle mode, Time Alignment Timer for idle mode), and a reference signal received power (Reference Signal Receiving Power, RSRP) change of a serving cell can be used to verify the validity of the TA.

However, a current technology does not provide a solution of how to use the foregoing verification criteria to determine validity of a TA. In addition, a current verification method is not very accurate. The time alignment timer in the idle mode is used as an example. When the time alignment timer does not expire, UE determines that the TA is valid; otherwise, the UE determines that the TA is invalid. However, the time alignment timer is inaccurate to some extent. For example, for UE with a small location change, although the time alignment timer expires, a location change of the UE is very small, and has little impact on the TA. Therefore, the TA is still available, in other words, the TA is still valid.

Based on this, the embodiments of this application provide a communication method and a device, to resolve a prior-art problem that accuracy of a method for verifying validity of a TA by UE is relatively low. The method and the apparatus are based on the same inventive concept. Because problem-resolving principles of the method and the device are similar, apparatus implementation and method implementation may be mutually referenced. Repeated parts are not described.

"A plurality of' in this embodiment of this application refers to two or more.

In the embodiments of this application, "a TA is valid" or "valid TA" may be understood as that the TA is accurate or available, that is, it can be ensured that a time at which uplink data sent by the terminal device by using the TA reaches the network device and a time at which uplink data sent by another terminal device reaches the network device are approximately the same, or a delay between the two times is within a delay range tolerated by a CP. In this way, there is no inter-user interference.

In the embodiments of this application, "a TA is invalid" or "invalid TA" may be understood as that the TA is inaccurate or unavailable, and a difference between a time at which uplink data sent by the terminal device by using the TA reaches the network device and a time at which uplink data sent by another terminal device reaches the network device is relatively large or is beyond the delay range tolerated by the CP. In this way, inter-user interference may be caused.

In addition, it should be understood that, in the description of this application, terms "first", "second", and the like are only used for a purpose of distinguishing between descriptions, but cannot be understood as an indication or implication of relative importance, and cannot be understood as an indication or implication of a sequence.

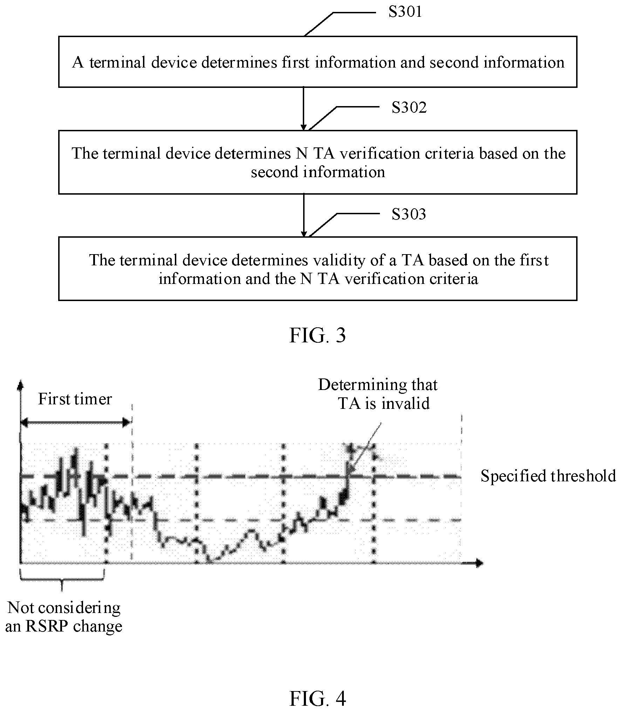

FIG. 3 is a flowchart of a communication method according to this application. The method may be applied to the terminal device in the communication system shown in FIG. 1, and the method includes the following steps:

S301. The terminal device determines first information and second information, where the first information is used by the terminal device to determine validity of a TA.

The first information may be predefined, or the first information may be configured by a network device.

In an example description, the first information may be a verification threshold, and is used to indicate a quantity of TA verification criteria considered when the terminal device verifies the validity of the TA, or indicate a quantity of TA verification criteria that simultaneously hold true, considered when the terminal device verifies the validity of the TA. In this example description, the first information may be determined by the network device based on a serving cell attribute (for example, a serving cell radius) of the terminal device and/or an attribute of the terminal device (for example, mobility of the terminal device) and sent to the terminal device, or the first information may be determined by the terminal device based on the serving cell attribute (for example, the serving cell radius) and/or the attribute of the terminal device (for example, the mobility of the terminal device). Alternatively, the first information may be a verification threshold preconfigured in the terminal device.

For example, the first information may be configured by the network device by using higher layer signaling, or may be configured by using physical layer signaling such as downlink control information (downlink control information, DCI), where the higher layer signaling may be radio resource control (radio resource control, RRC) signaling or a media access control control element (media access control control element, MAC CE). This is not specifically limited herein in this embodiment of this application.

It should be noted that, in this embodiment of this application, a TA verification criterion is merely an example name, and the TA verification criterion may also be named TA verification validity, a verification criterion, verification validity, a first criterion, or another name, for example, XX. It should be understood that, if XX may also implement a function implemented by the TA verification criterion in this embodiment of this application, XX may also be understood as the TA verification criterion in this embodiment of this application. For ease of description, criteria for verifying the validity of the TA are collectively referred to as TA verification criteria in the embodiments of this application.

In another example description, the first information may be a first factor $\alpha$, where $0 < \alpha \le 1$, and is used to indicate that the verification threshold is $\lfloor \alpha \times N \rfloor$ or $\lceil \alpha \times N \rceil$, that is, to indicate that the quantity of TA verification criteria considered when the terminal device verifies the validity of the TA is $\lfloor \alpha \times N \rfloor$ or $\lceil \alpha \times N \rceil$, where N is a quantity of TA verification criteria indicated by the second information. In this example description, $\alpha$ may be determined by the network device based on a serving cell attribute (for example, a serving cell radius) of the terminal device and/or an attribute of the terminal device (for example, mobility of the terminal device) and sent to the terminal device, or $\alpha$ may be determined by the terminal device based on the serving cell attribute (for example, the serving cell radius) and/or the attribute of the terminal device (for example, the mobility of the terminal device). Alternatively, $\alpha$ may be a verification threshold preconfigured in the terminal device.

In another example description, the first information may alternatively be a serving cell attribute (for example, a serving cell radius) and/or an attribute of the terminal device, so that the terminal device may determine a verification threshold based on the first information. In this example description, the first information may be sent by the network device to the terminal device, or the first information may be preconfigured by the terminal device, or the first information may be obtained by the terminal device in another manner.

The verification threshold is determined based on the serving cell attribute (for example, the serving cell radius) and/or the attribute of the terminal device, so that accuracy of TA validity verification can be effectively improved, and different TA verification scenarios can be adapted. For example, for a cell with relatively weak mobility or a relatively small radius, the verification threshold may be set to a properly larger value. In this way, the TA is invalid only when a plurality of verification criteria hold true. For a user with relatively strong mobility or cells with a relatively large radius, the verification threshold may be set to a smaller value, for example, 1. In this case, when any TA verification criterion is determined to be invalid, the TA is invalid.

S302. The terminal device determines N TA verification criteria based on the second information. Herein, N is an integer greater than or equal to 1, and the TA verification criteria include that the TA verification criteria hold true when a specified condition is met.

For example, the N TA verification criteria may include but are not limited to one or more of the following TA verification criteria: determining the validity of the TA based on RSRP of a serving cell; determining the validity of the TA based on an RSRP change of the serving cell; determining the validity of the TA based on a change of the serving cell; determining the validity of the TA based on a TA timer, where the TA timer may be a TA timer in a connected mode, or may be a time alignment timer in an idle mode (Time Alignment Timer for idle mode); determining the validity of the TA based on RSRP of a neighboring cell (Neighbour Cell RSRP); determining the validity of the TA based on an RSRP change of a neighboring cell (Neighbour cell RSRP change); determining the validity of the TA based on time differences of arrival (TDOA of two or more eNBs, Time Difference of Arrival) of signals of the plurality of network devices received by the terminal device; determining the validity of the TA based on historical data of a timing advance (TA History); and determining the validity of the TA based on subscriptions of different terminal devices (Subscription based UE differentiation), where the criterion is determining the validity of the TA based on coverage of a serving cell of a user. For example, for a cell whose coverage of a serving cell is very limited, the TA of the terminal device is always valid provided that the serving cell does not change, and so on. Certainly, the TA verification criteria may further include other criteria that are not enumerated herein one by one.

That "a TA verification criterion holds true" may be understood as determining, based on the TA verification criterion, that the TA is invalid. That "a TA verification criterion holds true" may also be referred to as that "the TA verification criterion meets a condition". That "a TA verification criterion does not hold" may be understood as determining, based on the TA verification criterion, that the TA is valid. That "a TA verification criterion does not hold" may also be referred to as that "the TA verification criterion does not meet a condition".

For example, if a TA verification criterion is determining the validity of the TA based on the TA timer, when the TA timer expires, it may be determined that the TA is invalid, in other words, the TA verification criterion holds true; otherwise, it may be determined that the TA is valid, in other words, the TA verification criterion does not hold. For another example, if a TA verification criterion is determining the validity of the TA based on RSRP of a serving cell, when the RSRP of the serving cell is less than a preset threshold, it may be determined that the TA is invalid, in other words, the TA verification criterion holds true; otherwise, it may be determined that the TA is valid, in other words, the TA verification criterion does not hold.

Alternatively, that "a TA verification criterion holds true" may be understood as determining, based on the TA verification criterion, that the TA is valid. That "a TA verification criterion holds true" may also be referred to as that "the TA verification criterion meets a condition". That "a TA verification criterion does not hold" may be understood as determining, based on the TA verification criterion, that the TA is invalid. That "a TA verification criterion does not hold" may also be referred to as that "the TA verification criterion does not meet a condition".

For example, if a TA verification criterion is determining the validity of the TA based on the TA timer, when the TA timer expires, it may be determined that the TA is invalid, in other words, the TA verification criterion does not hold; otherwise, it may be determined that the TA is valid, in other words, the TA verification criterion holds true. For another example, if a TA verification criterion is determining the validity of the TA based on RSRP of a serving cell, when the RSRP of the serving cell is less than a preset threshold, it may be determined that the TA is invalid, in other words, the TA verification criterion does not hold; otherwise, it may be determined that the TA is valid, in other words, the TA verification criterion holds true.

For ease of description, in this embodiment of this application, the following example is used for description: that "a TA verification criterion holds true" indicates that it is determined, based on the TA verification criterion, that the TA is invalid, and that "a TA verification criterion does not hold" indicates that it is determined, based on the TA verification criterion, that the TA is valid. A procedure of determining the validity of the TA by the terminal device when that "a TA verification criterion holds true" indicates that it is determined, based on the TA verification criterion, that the TA is valid is similar to a procedure of determining the validity of the TA by the terminal device when that "a TA verification criterion holds true" indicates that it is determined, based on the TA verification criterion, that the TA is valid. A difference lies in that descriptions about whether the TA verification criterion holds true are reversed. For example, when that "a TA verification criterion holds true" indicates that it is determined, based on the TA verification criterion, that the TA is invalid, the terminal device performs A when determining that the TA verification criterion holds true. Correspondingly, when that "a TA verification criterion holds true" indicates that it is determined, based on the TA verification criterion, that the TA is valid, the terminal device performs A when determining that the TA verification criterion does not hold.

The second information may be predefined, or the second information may be configured by the network device.

In an implementation, the second information may be the N TA verification criteria.

For example, the second information may be configured by the network device by using higher layer signaling, or may be configured by using physical layer signaling such as downlink control information (downlink control information, DCI), where the higher layer signaling may be radio resource control (radio resource control, RRC) signaling or a media access control control element (media access control control element, MAC CE). This is not specifically limited herein in this embodiment of this application.

In another implementation, the second information may alternatively be a first parameter, so that the terminal device may determine the N TA verification criteria based on the first parameter and a plurality of TA verification criteria that are predefined.

The first parameter may be an integer greater than or equal to 1. For example, the second information is 5. In this case, the second information may indicate that five TA verification criteria in the plurality of TA verification criteria predefined in the terminal device are used as the N TA verification criteria. For example, the five TA verification criteria may be five TA verification criteria with highest priorities in the plurality of TA verification criteria predefined in the terminal device, or may be the first five TA verification criteria in the plurality of TA verification criteria predefined in the terminal device.

Alternatively, the first parameter may be greater than 0 and less than or equal to 1. For example, the second information is 0.3 and the terminal device has predefined 10 TA verification criteria, the second information may indicate 10 x 0.3 TA verification criteria in the 10 TA verification criteria predefined in the terminal device. That is, the three TA verification criteria are used as the N TA verification criteria. For example, the three TA verification criteria may be three TA verification criteria with highest priorities in the 10 TA verification criteria predefined in the terminal device, or may be the first three TA verification criteria in the 10 TA verification criteria predefined in the terminal device.

In another implementation, the second information may alternatively be an identifier or an index, and is used to indicate the terminal device to use, as the N TA verification criteria, a plurality of TA verification criteria included in a TA verification criterion group corresponding to the indication or index.

Certainly, the second information may alternatively indicate the N TA verification criteria in other forms that are not enumerated herein one by one.

S303. The terminal device determines the validity of the TA based on the first information and the N TA verification criteria.

In this embodiment of this application, the terminal device determines the validity of the TA with reference to the first information and the N TA verification criteria, so that verification of the validity of the TA can be designed by combining different verification criteria effectively and properly, thereby improving accuracy of TA validity verification, and ensuring that no power consumption is wasted in a system and no interference is caused to the system.

In a possible implementation, the N TA verification criteria may include X TA verification criteria and Y TA verification criteria, where X is greater than or equal to 1, Y is greater than or equal to 0, and X + Y = N. That the terminal device determines the validity of the TA based on the first information and the N TA verification criteria may be implemented in the following manner: If the terminal device determines that none of the X TA verification criteria holds true, the terminal device may determine the validity of the TA based on the first information and the Y TA verification criteria. If the terminal device determines that at least one TA verification criterion in the X TA verification criteria holds true, the terminal device may determine that the TA is invalid.

In an example description, X may be equal to 1, and the X TA verification criteria may include determining, when a serving cell changes, that the TA is invalid. Therefore, when the serving cell of the terminal device changes, the terminal device may determine that the TA is invalid. When the serving cell of the terminal device changes, the terminal device needs to perform cell handover, and a distance from the terminal device to the network device may change relatively greatly, and the TA is not reserved with cell handover. Therefore, in this case, the TA definitely needs to be updated. Therefore, if the serving cell of the terminal device changes, the terminal device may determine that the TA is invalid. If the serving cell of the terminal device does not change, the terminal device may further determine the validity of the TA based on the Y TA verification criteria and the first information.

Further, that the terminal device further determines the validity of the TA based on the Y TA verification criteria and the first information may be implemented in the following manner: If the terminal device determines that at least M TA verification criteria in the Y TA verification criteria hold true, the terminal device may determine that the TA is invalid, where M is an integer greater than 0 and less than or equal to Y, and M is determined by the terminal device based on the first information. If the terminal device determines that less than M TA verification criteria in the Y TA verification criteria hold true, the terminal device may determine that the TA is valid.

For example, it is assumed that Y is equal to 10. If the terminal device determines, based on the first information, that M is equal to 5, when at least five TA verification criteria in the 10 TA verification criteria hold true, the terminal device may determine that the TA is invalid; otherwise, the terminal device may determine that the TA is valid.

The verification threshold M is determined based on the first information, so that verification of the validity of the TA can be designed by combining different verification criteria effectively and properly, thereby improving accuracy of TA validity verification.

In another possible implementation, the N TA verification criteria may be classified into a set of first TA verification criteria and a set of second TA verification criteria, the set of first TA verification criteria includes one or more TA verification criteria, and the set of second TA verification criteria includes one or more TA verification criteria. The TA verification criteria included in the set of first TA verification criteria are all different from the TA verification criteria included in the set of second TA verification criteria, in other words, no verification criterion belongs to both the first TA verification criteria and the second verification criteria. When the terminal device determines the validity of the TA based on the first information and the N TA verification criteria, if the terminal device determines that at least one TA verification criterion in the set of first TA verification criteria holds true, the terminal device may determine that the TA is invalid. If the terminal device determines that no TA verification criteria in the set of first TA verification criteria holds true, the terminal device may determine the validity of the TA based on the set of second TA verification criteria and the first information. For a procedure in which the terminal device can determine the validity of the TA based on the set of second TA verification criteria and the first information, refer to a procedure in which the terminal device further determines the validity of the TA based on the Y TA verification criteria and the first information. Details are not described herein again.

Further, when the terminal device determines the validity of the TA based on the first information and the set of second TA verification criteria, if the terminal device determines that at least M TA verification criteria in the set of second TA verification criteria hold true, the terminal device may determine that the TA is invalid, where m is an integer greater than 0, and m is determined by the terminal device based on the first information. If the terminal device determines that less than m TA verification criteria in the set of second TA verification criteria hold true, the terminal device may determine that the TA is valid, where m is an integer greater than 0, and m is determined by the terminal device based on the first information.

In this embodiment of this application, the N TA verification criteria are classified into two types based on priorities or degrees of correlations with the validity of the TA. One type of verification criteria (namely, the X TA verification criteria or the set of first TA verification criteria) is strongly correlated with the validity of the TA, and the other type of verification criteria (namely, the Y TA verification criteria or the second set of TA verification criteria) is relatively weakly correlated with the validity of the TA. The validity of the TA can be more accurately evaluated by classifying the N verification criteria. For example, it indicates that the TA is invalid provided that one of the TA verification criteria of the strongly correlated type holds true, and the TA is invalid if only one or more of the verification criteria of the weakly correlated type hold true only when none of the verification criteria of the strongly correlated type holds true. In another possible implementation, that the terminal device determines the validity of the TA based on the first information and the N TA verification criteria may alternatively be implemented in the following manner: If the terminal device can determine that at least S TA verification criteria in the N TA verification criteria hold true, the terminal device determines that the TA is invalid, where $0 < S \leq N$, and S is an integer determined by the terminal device based on the first information. If the terminal device can determine that less than S TA verification criteria in the N TA verification criteria hold true, the terminal device determines that the TA is valid.

For example, it is assumed that N is equal to 8. If the terminal device determines, based on the first information, that S is equal to 3, when at least three TA verification criteria in the eight TA verification criteria hold true, the terminal device may determine that the TA is invalid; otherwise, the terminal device may determine that the TA is valid.

The verification threshold S is determined based on the first information, so that verification of the validity of the TA can be designed by combining different verification criteria effectively and properly, thereby improving accuracy of TA validity verification.

In another possible implementation, that the terminal device determines the validity of the TA based on the first information and the N TA verification criteria may alternatively be implemented in the following manner: If the terminal device determines that at least one TA verification criterion in the R TA verification criteria holds true, the terminal device determines that the TA is invalid. The R TA verification criteria are determined by the terminal device based on the N TA verification criteria and a first rule, $0 < R \leq N$, R is an integer determined by the terminal device based on the first information, and the first rule is predefined, or configured by the network device. If the terminal device determines that none of the R TA verification criteria holds true, the terminal device determines that the TA is valid.

In a possible design, the first rule may be determining the R TA verification criteria based on priorities of the N TA verification criteria. For example, the first rule may be determining the R TA verification criteria in descending order of priorities of the N TA verification criteria, or the first rule may be determining the R TA verification criteria in ascending order of priorities of the N TA verification criteria. It should be noted that priorities of different TA verification criteria may be the same or may be different. For example, a priority of determining the validity of the TA based on a serving cell change is greater than a priority of determining the validity of the TA based on a TA timer, which is greater than or equal to a priority of determining the validity of the TA based on an RSRP change of a serving cell. A priority of a TA verification criterion priority may be configured by the network device by using a higher layer, or may be specified in a protocol, or may be predefined by the terminal device. This is not specifically limited herein.

For example, the terminal device determines the verification threshold R based on the first information, and arranges the N TA verification criteria in descending order of priorities to select the first R TA verification criteria. If at least one TA verification criterion in the R TA verification criteria holds true, the terminal device may determine that the TA is invalid; otherwise, the terminal device may determine that the TA is valid. Alternatively, if all the R TA verification criteria hold true, the terminal device may determine that the TA is invalid; otherwise, the terminal device may determine that the TA is valid.

In a possible design, the first rule may alternatively be determining the R TA verification criteria based on correlations of the N TA verification criteria, where the correlation may be a correlation between a TA verification criterion and the TA, or the like. For example, the first rule may be determining the R TA verification criteria in descending order of correlations of the N TA verification criteria, or the first rule may be determining the R TA verification criteria in ascending order of correlations of the N TA verification criteria. It should be noted that correlations of different TA verification criteria may be the same or may be different. For example, a correlation of determining the validity of the TA based on a serving cell change is greater than a correlation of determining the validity of the TA based on a TA timer, which is greater than or equal to a correlation of determining the validity of the TA based on an RSRP change of a serving cell. A priority of a TA verification criterion priority may be configured by the network device by using a higher layer, or may be specified in a protocol, or may be predefined by the terminal device. This is not specifically limited herein.

The R TA verification criteria are determined by using the N TA verification criteria, the first information, and the first rule, and then the validity of the TA is verified by combining the R TA verification criteria, so that efficiency and accuracy of TA validity verification can be improved.

The RSRP of the serving cell is affected by many factors, such as shadow and multipath. Therefore, under impact of factors such as shadow and multipath, the RSRP changes greatly but actually the TA changes slightly, and the TA is still valid. In addition, an initial phase of RSRP measurement has poor stability and is unreliable. Therefore, an error is likely to occur when the validity of the TA is determined based on the RSRP change of the serving cell. Based on this, in this embodiment of this application, the N TA verification criteria may include a first TA verification criterion, and the first TA verification criterion includes: if a first timer does not expire, the first TA verification criterion does not hold; or if the first timer expires and a first RSRP value is less than a specified threshold, the first TA verification criterion does not hold; or if the first timer expires and the first RSRP value is greater than or equal to the specified threshold, the first TA verification criterion holds true, as shown in FIG. 4.

The first RSRP value may be a difference between two measured RSRP values. For example, the first RSRP value may be a difference between an RSRP value of a serving cell when a TA is obtained last time and a current RSRP value of the serving cell. Alternatively, the first RSRP value may be a difference between an average value of RSRP values of the serving cell measured in a period of time and the current RSRP value of the serving cell, or the like. This is not specifically limited herein in this embodiment of this application. The RSRP value may be a linear value (linear value) or may be a decibel (dB) value.

The first timer may be sent by the network device to the terminal device, or may be specified in a protocol, or may be determined by the terminal device based on a property (for example, mobility) of the terminal device.

In this embodiment of this application, the first timer is set. Before the first timer expires, because an RSRP measurement time period is inaccurate and changes relatively greatly, the first RSRP value may not be considered when the validity of the TA is verified, and then, impact of the first RSRP value on the validity of the TA is considered when the first timer expires. In this way, the impact of the RSRP on the validity of the TA and a misjudgment of the validity of the TA in an inaccurate initial measurement phase can be effectively eliminated, stability and accuracy of TA verification can be improved, system performance can be improved, unnecessary TA update operations can be reduced, and user power consumption can be reduced.

Alternatively, the N TA verification criteria may include a fifth TA verification criterion, and the fifth TA verification criterion includes: The first TA verification criterion does not hold before a first moment; or if the first RSRP value is less than the specified threshold after the first moment, the first TA verification criterion does not hold; or if the first RSRP value is greater than or equal to the specified threshold after the first moment, the first TA verification criterion holds true.The N TA verification criteria may further include a third TA verification criterion, and the third TA verification criterion includes: if a third timer does not expire, the third TA verification criterion does not hold; or if the third timer expires and a third RSRP value is greater than a specified threshold, the third TA verification criterion does not hold; or if the third timer expires and the third RSRP value is less than or equal to the specified threshold, the third TA verification criterion holds true. The third timer may be the same as the first timer, or may be different from the first timer. The third RSRP value may be a measured RSRP value. For example, the third RSRP value may be the current RSRP value of the serving cell, or the third RSRP value may be an average value of RSRP values of the serving cell measured in a period of time, or the like. This is not specifically limited herein in this embodiment of this application. The RSRP value may be a linear value (linear value) or may be a decibel (dB) value.

The TA timer is inaccurate to some extent. For example, for a terminal device with a small location change, although the TA timer expires, a location change of the user is very small and has little impact on the TA. Therefore, the TA is still valid. Therefore, an error is likely to occur when the validity of the TA is determined based on the TA timer. Based on this, in this embodiment of this application, the N TA verification criteria may include a second TA verification criterion, and the second TA verification criterion includes: if a second RSRP value is less than a first threshold, the second TA verification criterion does not hold; or if the second RSRP value is greater than or equal to the first threshold, and a second timer does not expire, the second TA verification criterion does not hold; or if the second RSRP value is greater than or equal to the first threshold, and the second timer expires, the second TA verification criterion holds true. The second timer may be configured to record a valid time of the TA. For example, the second timer may be a TA timer in a connected mode, or a time alignment timer in an idle mode (Time Alignment Timer for idle mode). The second RSRP value may be a difference between two measured RSRP values. For example, the second RSRP value may be a difference between an RSRP value of a serving cell when a TA is obtained last time and a current RSRP value of the serving cell. Alternatively, the second RSRP value may be a difference between an average value of RSRP values of the serving cell measured in a period of time and the current RSRP value of the serving cell, or the like. This is not specifically limited herein in this embodiment of this application. The RSRP value may be a linear value (linear value) or may be a decibel (dB) value.

Further, if the second RSRP value is less than the first threshold, the terminal device may alternatively not start the second timer. After the second RSRP value is greater than or equal to the first threshold, the terminal device starts the second timer.

The N TA verification criteria may further include a fourth TA verification criterion, and the fourth TA verification criterion includes: if a fourth RSRP value is greater than a second threshold, the fourth TA verification criterion does not hold; or if the fourth RSRP value is less than or equal to the second threshold, and the second timer does not expire, the fourth TA verification criterion does not hold; or if the fourth RSRP value is less than or equal to the second threshold, and the second timer expires, the fourth TA verification criterion holds true.

The fourth RSRP value may be a measured RSRP value. For example, the fourth RSRP value may be a current RSRP value of a serving cell, or the fourth RSRP value may be an average value of RSRP values of the serving cell measured in a period of time, or the like. This is not specifically limited herein in this embodiment of this application. The RSRP value may be a linear value (linear value) or may be a decibel (dB) value.

Further, if the fourth RSRP value is greater than the second threshold, the terminal device may alternatively not start the second timer. After the fourth RSRP value is less than or equal to the first threshold, the terminal device starts the second timer.

The RSRP change may reflect a moving distance of the terminal device to some extent. In this embodiment of this application, when the second RSRP value is relatively small (that is, when the second RSRP value is less than the first threshold), it may be considered that the moving distance of the terminal device is relatively small. Therefore, the second timer may not be considered during TA validity verification. When the second RSRP value is relatively large (that is, when the second RSRP value is greater than or equal to the first threshold), it may be considered that the moving distance of the terminal device is relatively large. Therefore, then, the second timer may be considered during TA validity verification. In this manner, validity misjudgment caused by the TA timer can be effectively eliminated, and stability and accuracy of TA validity verification are improved. In this way, system performance can be improved, unnecessary TA update operations can be reduced, and user power consumption can be reduced.

In specific implementation, if the terminal device determines that the TA is invalid, the terminal device may transmit uplink data through early data transmission (Early data transmission, EDT). This manner may be understood as that when the terminal device determines that the TA is invalid, in a random access procedure, the terminal device is allowed to send uplink data after one downlink data transmission (Allows one uplink data transmission optionally followed by one downlink data transmission during the random access procedure). Alternatively, this manner may be understood as that when the terminal device determines that the TA is invalid, the terminal device may add user uplink data to a third message in the random access procedure.

Alternatively, if the terminal device determines that the TA is invalid, the terminal device may initiate a random access procedure (random access procedure). Alternatively, the terminal device may obtain a new TA in a two-step random access channel (random access channel, RACH) manner.

In addition, when determining that the TA is invalid, the terminal device may further send a first message to the network device, where the first message is used to notify the network device of one or more of the following content: the TA is invalid; the TA is updated; and a first resource is released, where the first resource is a preconfigured transmission resource.

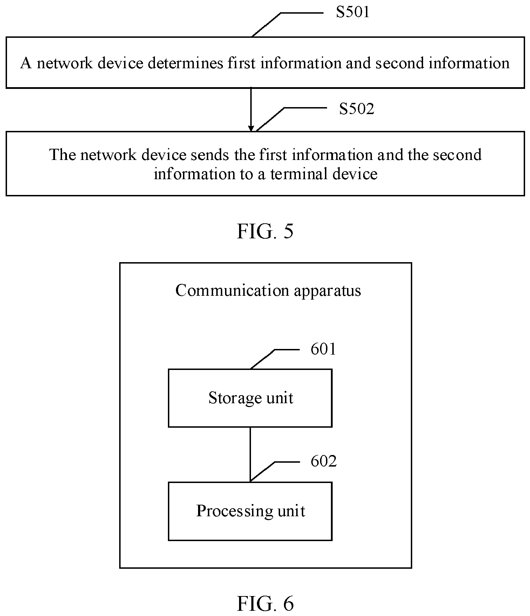

FIG. 5 is a flowchart of a communication method according to this application. The method may be applied to the network device in the communication system shown in FIG. 1, and the method includes the following steps:

S501. The network device determines first information and second information, where the first information is used by a terminal device to determine validity of a TA, the second information is used by the terminal device to determine N TA verification criteria, and N is an integer greater than or equal to 1.

For the first information and the second information, refer to related descriptions of the first information and the second information in the method shown in FIG. 3. Details are not described herein again.

S502. The network device sends the first information and the second information to the terminal device.

In this embodiment of this application, the network device sends the first information and the second information to the terminal device, so that the terminal device can determine the validity of the TA with reference to the first information and the N TA verification criteria, and the terminal device can effectively and properly combine different verification criteria to design verification of the validity of the TA, thereby improving accuracy of TA validity verification, and ensuring that no power consumption is wasted in a system and no interference is caused to the system.

In specific implementation, the second information may alternatively be predefined by the terminal device, or the network device may send only the first information, where the first information is used to enable the UE to determine the validity of the TA based on the first information and the verification criteria.

In addition, the network device may further send a first rule to the terminal device, where the first rule is determining the R TA verification criteria in descending order of priorities of the N TA verification criteria. For the first rule, refer to related descriptions of the first rule in the method shown in FIG. 3. Details are not described herein again.Based on a same inventive concept as the method embodiments, an embodiment of this application provides a communication apparatus, specifically configured to implement a function of the terminal device in the embodiment in FIG. 3. The apparatus may be the terminal device, or may be a chip in the terminal device, a chip group, or a part that is of the chip and that is configured to perform a related method function. A structure of the communication apparatus may be shown in FIG. 6, and includes a storage unit 601 and a processing unit 602. The storage unit 601 is configured to store a computer program. The processing unit 602 is configured to invoke the computer program stored in the storage unit 601, to determine first information and second information, where the first information is used by the communication apparatus to determine validity of a TA; determine N TA verification criteria based on the second information, where N is an integer greater than or equal to 1, and the TA verification criterion includes that the TA verification criterion holds true when a specified condition is met; and determine the validity of the TA based on the first information and the N TA verification criteria.

In an implementation, the N TA verification criteria may include X TA verification criteria and Y TA verification criteria, where X is greater than or equal to 1, Y is greater than or equal to 0, and X + Y = N; and when determining the validity of the TA based on the first information and the N TA verification criteria, the processing unit 602 is specifically configured to: if the processing unit 602 determines that none of the X TA verification criteria holds true, determine the validity of the TA based on the first information and the Y TA verification criteria; or if the processing unit 602 determines that at least one TA verification criterion in the X TA verification criteria holds true, determine that the TA is invalid.

Further, when determining the validity of the TA based on the first information and the Y TA verification criteria, the processing unit 602 is specifically configured to: if the processing unit 602 determines that at least M TA verification criteria in the Y TA verification criteria hold true, determine that the TA is invalid, where M is an integer greater than 0 and less than or equal to Y, and M is determined by the processing unit 602 based on the first information.

In another implementation, when determining the validity of the TA based on the first information and the N TA verification criteria, the processing unit 602 may be specifically configured to: if the processing unit 602 determines that at least S TA verification criteria in the N TA verification criteria hold true, determine that the TA is invalid, where $0 < S \leq N$, and S is an integer determined by the processing unit 602 based on the first information.

When determining the validity of the TA based on the first information and the N TA verification criteria, the processing unit 602 may further be specifically configured to: if the processing unit 602 determines that at least one TA verification criterion in R TA verification criteria holds true, determine that the TA is invalid, where the R TA verification criteria are determined by the processing unit 602 based on the N TA verification criteria and a first rule, $0 < R \leq N$, R is an integer determined by the processing unit 602 based on the first information, and the first rule is predefined, or configured by a network device.

For example, the first rule is determining the R TA verification criteria in descending order of priorities of the N TA verification criteria.

In an example description, the N TA verification criteria include a first TA verification criterion, and the first TA verification criterion includes: if a first timer does not expire, the first TA verification criterion does not hold; if a first timer expires and a first RSRP value is less than a specified threshold, the first TA verification criterion does not hold; or if a first timer expires and a first RSRP value is greater than or equal to a specified threshold, the first TA verification criterion holds true.

In an example description, the N TA verification criteria include a second TA verification criterion, and the second TA verification criterion includes: if a second RSRP value is less than a first threshold, the second TA verification criterion does not hold; if a second RSRP value is greater than or equal to a first threshold, and a second timer does not expire, the second TA verification criterion does not hold; or if a second RSRP value is greater than or equal to a first threshold, and a second timer expires, the second TA verification criterion holds true.

Division into modules in this embodiment of this application is an example, and is merely logical function division. There may be other division in actual implementation. In addition, functional modules in the embodiments of this application may be integrated into one processor, or each of the modules may exist alone physically, or two or more modules may be integrated into one module. The integrated module may be implemented in a form of hardware, or may be implemented in a form of a software functional module.

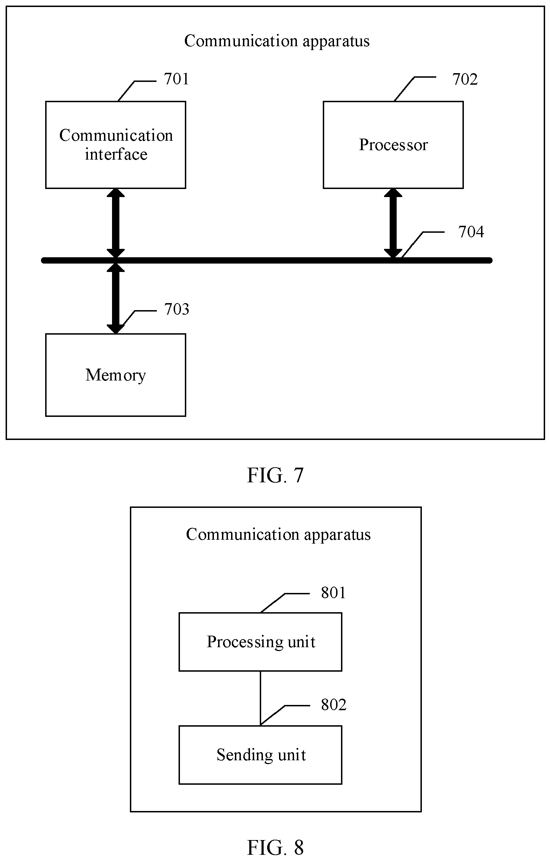

When the integrated module may be implemented in a form of hardware, the communication apparatus may be shown in FIG. 7, and the processing unit 602 may be a processor 702. The processor 702 may be a central processing module (central processing unit, CPU), a digital processing module, or the like. The storage unit 601 may be a memory 703, and is configured to store a program executed by the processor 702. The memory 703 may be a nonvolatile memory, for example, a hard disk drive (hard disk drive, HDD) or a solid-state drive (solid-state drive, SSD), or may be a volatile memory (volatile memory), for example, a random-access memory (random-access memory, RAM). The memory 703 is any other medium that can be configured to carry or store expected program code that has an instruction structure form or a data structure form and that can be accessed by a computer, but is not limited thereto.

The processor 702 is configured to execute the program code stored in the memory 703, and is specifically configured to perform an action of the processing unit 602. Details are not described in this application again.

The communication apparatus further includes a communication interface 701. The communication interface 701 may be a transceiver, may be an interface circuit such as a transceiver circuit, or may be a transceiver chip, or the like.

In this embodiment of this application, a specific connection medium between the communication interface 701, the processor 702, and the memory 703 is not limited. In this embodiment of this application, in FIG. 7, the memory 703, the processor 702, and the communication interface 701 are connected by using a bus 704. In FIG. 7, the bus is represented by using a thick line. A manner for connecting other components is only used as an example for description, and this embodiment is not limited thereto. The bus may be classified into an address bus, a data bus, a control bus, and the like. For ease of representation, only one thick line is used to represent the bus in FIG. 7, but this does not mean that there is only one bus or only one type of bus.

Based on a same inventive concept as the method embodiments, an embodiment of this application provides a communication apparatus, specifically configured to implement a function of the network device in the embodiment in FIG. 5. The apparatus may be the network device, or may be a chip in the network device, a chip group, or a part that is of the chip and that is configured to perform a related method function. A structure of the communication apparatus may be shown in FIG. 8, and includes a processing unit 801 and a sending unit 802. The processing unit 801 is configured to determine first information and second information, where the first information is used by a terminal device to determine validity of a TA, the second information is used by the terminal device to determine N TA verification criteria, and N is an integer greater than or equal to 1; and the sending unit 802 is configured to send the first information and the second information to the terminal device.

In specific implementation, the processing unit 801 may alternatively determine only the first information, and the sending unit 802 may send only the first information to the terminal device.

The sending unit 802 may be further configured to send a first rule to the terminal device, where the first rule is determining R TA verification criteria in descending order of priorities of the N TA verification criteria.

Division into modules in this embodiment of this application is an example, and is merely logical function division. There may be other division in actual implementation. In addition, functional modules in the embodiments of this application may be integrated into one processor, or each of the modules may exist alone physically, or two or more modules may be integrated into one module. The integrated module may be implemented in a form of hardware, or may be implemented in a form of a software functional module.

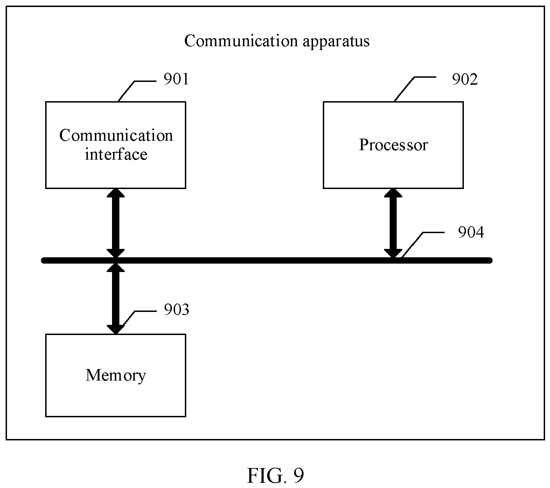

When the integrated module may be implemented in a form of hardware, the communication apparatus may be shown in FIG. 9, and the processing unit 801 may be a processor 902. The processor 902 may be a CPU, a digital processing module, or the like. The sending unit 802 may be a communication interface 901. The communication interface 901 may be a transceiver, may be an interface circuit such as a transceiver circuit, or may be a transceiver chip, or the like. The network device further includes a memory 903, configured to store a program executed by the processor 801. The memory 903 may be a nonvolatile memory, for example, an HDD or an SSD, or may be a volatile memory, for example, a RAM. The memory 903 is any other medium that can be configured to carry or store expected program code that has an instruction structure form or a data structure form and that can be accessed by a computer, but is not limited thereto.

The processor 902 is configured to execute the program code stored in the memory 903, and is specifically configured to perform an action of the processing unit 801. Details are not described in this application again.

In this embodiment of this application, a specific connection medium between the communication interface 901, the processor 902, and the memory 903 is not limited. In this embodiment of this application, in FIG. 9, the memory 903, the processor 902, and the communication interface 901 are connected by using a bus 904.

In FIG. 9, the bus is represented by using a thick line. A manner for connecting other components is only used as an example for description, and this embodiment is not limited thereto. The bus may be classified into an address bus, a data bus, a control bus, and the like. For ease of representation, only one thick line is used to represent the bus in FIG. 9, but this does not mean that there is only one bus or only one type of bus.

A person skilled in the art should understand that the embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to the embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can indicate the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

It is clear that a person skilled in the art can make various modifications and variations to the embodiments of this application without departing from the spirit and scope of this application. This application is intended to cover these modifications and variations provided that they fall within the scope of protection defined by the following claims and their equivalent technologies.

**Claims**

1.   A communication method, comprising:

determining, by a terminal device, first information and second information, wherein the first information is used by the terminal device to determine validity of a TA;
determining, by the terminal device, N TA verification criteria based on the second information, wherein N is an integer greater than or equal to 1, and the TA verification criterion comprises that the TA verification criterion holds true when a specified condition is met; and
determining, by the terminal device, the validity of the TA based on the first information and the N TA verification criteria.

2.   The method according to claim 1, wherein the N TA verification criteria comprise X TA verification criteria and Y TA verification criteria, wherein X is greater than or equal to 1, Y is greater than or equal to 0, and X + Y = N; and the determining, by the terminal device, the validity of the TA based on the first information and the N TA verification criteria comprises:

if the terminal device determines that none of the X TA verification criteria holds true, determining, by the terminal device, the validity of the TA based on the first information and the Y TA verification criteria; or
if the terminal device determines that at least one TA verification criterion in the X TA verification criteria holds true, determining, by the terminal device, that the TA is invalid.

3.   The method according to claim 2, wherein the determining, by the terminal device, the validity of the TA based on the first information and the Y TA verification criteria comprises:
if the terminal device determines that at least M TA verification criteria in the Y TA verification criteria hold true, determining, by the terminal device, that the TA is invalid, wherein M is an integer greater than 0 and less than or equal to Y, and M is determined by the terminal device based on the first information.

4.   The method according to claim 1, wherein the determining, by the terminal device, the validity of the TA based on the first information and the N TA verification criteria comprises:

if the terminal device determines that at least S TA verification criteria in the N TA verification criteria hold true, determining, by the terminal device, that the TA is invalid, wherein $0 < S \leq N$, and S is an integer determined by the terminal device based on the first information.

5. The method according to claim 1, wherein the determining, by the terminal device, the validity of the TA based on the first information and the N TA verification criteria comprises:

if the terminal device determines that at least one TA verification criterion in R TA verification criteria holds true, determining, by the terminal device, that the TA is invalid, wherein the R TA verification criteria are determined by the terminal device based on the N TA verification criteria and a first rule, $0 < R \leq N$, R is an integer determined by the terminal device based on the first information, and the first rule is predefined, or configured by a network device.

6. The method according to claim 5, wherein the first rule is determining the R TA verification criteria in descending order of priorities of the N TA verification criteria.

7. The method according to any one of claims 1 to 6, wherein the N TA verification criteria comprise a first TA verification criterion, and the first TA verification criterion comprises:

if a first timer does not expire, the first TA verification criterion does not hold;
if a first timer expires and a first RSRP value is less than a specified threshold, the first TA verification criterion does not hold; or
if a first timer expires and a first RSRP value is greater than or equal to a specified threshold, the first TA verification criterion holds true.

8. The method according to any one of claims 1 to 7, wherein the N TA verification criteria comprise a second TA verification criterion, and the second TA verification criterion comprises:

if a second RSRP value is less than a first threshold, the second TA verification criterion does not hold;
if a second RSRP value is greater than or equal to a first threshold, and a second timer does not expire, the second TA verification criterion does not hold; or
if a second RSRP value is greater than or equal to a first threshold, and a second timer expires, the second TA verification criterion holds true.

9. A communication method, comprising:

determining, by a network device, first information and second information, wherein the first information is used by a terminal device to determine validity of a TA, the second information is used by the terminal device to determine N TA verification criteria, and N is an integer greater than or equal to 1; and
sending, by the network device, the first information and the second information to the terminal device.

10. The method according to claim 9, wherein the method further comprises: sending, by the network device, a first rule to the terminal device, wherein the first rule is determining R TA verification criteria in descending order of priorities of the N TA verification criteria.

11. A communication apparatus, comprising:

a memory, configured to store a computer program; and
a processing unit, configured to invoke the computer program stored in the storage unit to perform the following steps:

determining first information and second information, wherein the first information is used by the communication apparatus to determine validity of a TA;
determining N TA verification criteria based on the second information, wherein N is an integer greater than or equal to 1, and the TA verification criterion comprises that the TA verification criterion holds true when a specified condition is met; and
determining the validity of the TA based on the first information and the N TA verification criteria.

12. The communication apparatus according to claim 11, wherein the N TA verification criteria comprise X TA verification criteria and Y TA verification criteria, wherein X is greater than or equal to 1, Y is greater than or equal to 0, and X + Y = N; and when determining the validity of the TA based on the first information and the N TA verification criteria, the processing unit is specifically configured to:

if the processing unit determines that none of the X TA verification criteria holds true, determine the validity of the TA based on the first information and the Y TA verification criteria; or
if the processing unit determines that at least one TA verification criterion in the X TA verification criteria holds true, determine that the TA is invalid.

**13.** The communication apparatus according to claim 12, wherein when determining the validity of the TA based on the first information and the Y TA verification criteria, the processing unit is specifically configured to:
if the processing unit determines that at least M TA verification criteria in the Y TA verification criteria hold true, determine that the TA is invalid, wherein M is an integer greater than 0 and less than or equal to Y, and M is determined by the processing unit based on the first information.

**14.** The communication apparatus according to claim 11, wherein when determining the validity of the TA based on the first information and the N TA verification criteria, the processing unit is specifically configured to:
if the processing unit determines that at least S TA verification criteria in the N TA verification criteria hold true, determine that the TA is invalid, wherein $0 < S \leq N$, and S is an integer determined by the processing unit based on the first information.

**15.** The communication apparatus according to claim 11, wherein when determining the validity of the TA based on the first information and the N TA verification criteria, the processing unit is specifically configured to:
if the processing unit determines that at least one TA verification criterion in R TA verification criteria holds true, determine that the TA is invalid, wherein the R TA verification criteria are determined by the processing unit based on the N TA verification criteria and a first rule, $0 < R \leq N$, R is an integer determined by the processing unit based on the first information, and the first rule is predefined, or configured by a network device.

**16.** The communication apparatus according to claim 15, wherein the first rule is determining the R TA verification criteria in descending order of priorities of the N TA verification criteria.

**17.** The communication apparatus according to any one of claims 11 to 16, wherein the N TA verification criteria comprise a first TA verification criterion, and the first TA verification criterion comprises:

if a first timer does not expire, the first TA verification criterion does not hold;
if a first timer expires and a first RSRP value is less than a specified threshold, the first TA verification criterion does not hold; or
if a first timer expires and a first RSRP value is greater than or equal to a specified threshold, the first TA verification criterion holds true.

**18.** The communication apparatus according to any one of claims 11 to 17, wherein the N TA verification criteria comprise a second TA verification criterion, and the second TA verification criterion comprises:

if a second RSRP value is less than a first threshold, the second TA verification criterion does not hold;
if a second RSRP value is greater than or equal to a first threshold, and a second timer does not expire, the second TA verification criterion does not hold; or
if a second RSRP value is greater than or equal to a first threshold, and a second timer expires, the second TA verification criterion holds true.

**19.** A communication apparatus, comprising:

a processing unit, configured to determine first information and second information, wherein the first information is used by a terminal device to determine validity of a TA, the second information is used by the terminal device to determine N TA verification criteria, and N is an integer greater than or equal to 1; and
a sending unit, configured to send the first information and the second information to the terminal device.

**20.** The apparatus according to claim 19, wherein the sending unit is further configured to send a first rule to the terminal device, wherein the first rule is determining R TA verification criteria in descending order of priorities of the N TA verification criteria.

**21.** A computer-readable storage medium, wherein the computer-readable storage medium stores a program, and the program is read and executed by one or more processors to implement the method according to any one of claims 1 to 10.

FIG. 1

| CP | Data |
|---|---|

FIG. 2

S301

A terminal device determines first information and second information

S302

The terminal device determines N TA verification criteria based on the second information

S303

The terminal device determines validity of a TA based on the first information and the N TA verification criteria

FIG. 3

First timer

Determining that TA is invalid

Specified threshold

Not considering an RSRP change

FIG. 4

S501

A network device determines first information and second information

S502

The network device sends the first information and the second information to a terminal device

FIG. 5

Communication apparatus

601

Storage unit

602

Processing unit

FIG. 6

Communication apparatus

701

Communication
interface

702

Processor

704

703

Memory

FIG. 7

Communication apparatus

801

Processing unit

802

Sending unit

FIG. 8

FIG. 9

## INTERNATIONAL SEARCH REPORT

| International application No. |
|---|
| **PCT/CN2019/075249** |

**A.     CLASSIFICATION OF SUBJECT MATTER**

H04W 56/00(2009.01)i

According to International Patent Classification (IPC) or to both national classification and IPC

**B.     FIELDS SEARCHED**

Minimum documentation searched (classification system followed by classification symbols)

H04W; H04Q

Documentation searched other than minimum documentation to the extent that such documents are included in the fields searched

Electronic data base consulted during the international search (name of data base and, where practicable, search terms used)

CNPAT; WPI; EPODOC; CNKI; IEEE: 时间提前量, 时间提前, 验证准则, 定时时间差, 有效性, 有效, 定时提前量, 准则, TA验证准则, 属性, 验证, TA, timing, availability, advance, DCI, validate, detect, rule, property

**C.     DOCUMENTS CONSIDERED TO BE RELEVANT**

| Category* | Citation of document, with indication, where appropriate, of the relevant passages | Relevant to claim No. |
|---|---|---|
| X | CN 102281626 A (CHINA ACADEMY OF TELECOMMUNICATIONS TECHNOLOGY) 14 December 2011 (2011-12-14) description, paragraphs [0072]-[0090] | 1, 9-11, 19-21 |
| A | CN 102281626 A (CHINA ACADEMY OF TELECOMMUNICATIONS TECHNOLOGY) 14 December 2011 (2011-12-14) entire document | 2-8, 12-18 |
| A | CN 106550415 A (ZTE CORPORATION) 29 March 2017 (2017-03-29) entire document | 1-21 |
| A | WO 2019029732 A1 (HUAWEI TECHNOLOGIES CO., LTD.) 14 February 2019 (2019-02-14) entire document | 1-21 |

| ☐ Further documents are listed in the continuation of Box C. | ☑ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **21 October 2019** | **12 November 2019** |

| Name and mailing address of the ISA/CN | Authorized officer |
|---|---|
| **China National Intellectual Property Administration** **No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2019/075249**

| Patent document cited in search report | | | Publication date (day/month/year) | Patent family member(s) | | | Publication date (day/month/year) |
|---|---|---|---|---|---|---|---|
| CN | 102281626 | A | 14 December 2011 | None | | | |
| CN | 106550415 | A | 29 March 2017 | WO | 2017050010 | A1 | 30 March 2017 |
| WO | 2019029732 | A1 | 14 February 2019 | CN | 110225549 | A | 10 September 2019 |
| | | | | CN | 109392147 | A | 26 February 2019 |

Form PCT/ISA/210 (patent family annex) (January 2015)